# FASCICULE DE BREVET EUROPEEN

(11) **EP 3 747 120 B1**
(45) Date de publication et mention de la délivrance du brevet: **23.02.2022**
(21) Numéro de dépôt: 19700978.0
(22) Date de dépôt: 24.01.2019
(51) Int. Cl.: H02P 6/20, H02P 9/48

(54) **PROCÉDÉ DE GESTION DE COUPURE DE COUPLE MOTEUR POUR UNE MACHINE ELECTRIQUE TOURNANTE**
ANTRIEBSMOMENTABSCHALTVERWALTUNGSVERFAHREN FÜR EINE ROTIERENDE ELEKTRISCHE MASCHINE
DRIVE TORQUE CUT-OFF MANAGEMENT METHOD FOR A ROTARY ELECTRIC MACHINE

(30) Priorité: 30.01.2018 FR 1850745
(43) Date de publication de la demande: 09.12.2020
(73) Titulaire: VALEO EQUIPEMENTS ELECTRIQUES MOTEUR, 94046 Créteil Cedex (FR)
(72) Inventeur: CARREIRO, Wilfried, 94046 CRETEIL CEDEX (FR); GRANGLADEN, Ambre-Emmanuelle, 94046 CRETEIL CEDEX (FR)
(74) Mandataire: Valeo Powertrain Systems
(86) Numéro de dépôt international: PCT/EP2019/051808
(87) Numéro de publication internationale: WO 2019/149622

(56) Documents cités:
- JP-A- 2012 040 928
- US-A1- 2006 046 893
- US-B2- 8 512 200

## Description

La présente invention porte sur un procédé de gestion de coupure de couple moteur pour une machine électrique tournante.

De façon connue en soi, une machine électrique réversible peut être accouplée au moteur thermique, notamment via la façade accessoires.

Cette machine électrique, appelée communément alterno-démarreur, est apte à fonctionner dans un mode générateur pour recharger une batterie du véhicule ainsi que dans un mode moteur pour fournir un couple au véhicule. Le mode générateur peut être utilisé dans une fonction de freinage récupératif permettant à la machine électrique de fournir de l'énergie électrique à la batterie lors d'une phase de freinage.

Le mode moteur peut notamment être utilisé dans une fonction d'arrêt et de redémarrage automatique du moteur thermique en fonction des conditions de circulation (fonction dite STT pour "stop and start" en anglais), une fonction d'assistance au calage du moteur thermique, une fonction dite "boost" en anglais permettant à la machine électrique d'assister ponctuellement le moteur thermique lors d'une phase de roulage en mode thermique, et une fonction de roue libre, dite de "coasting" en anglais, permettant d'automatiser l'ouverture de la chaîne de traction sans action explicite du conducteur pour réduire le régime moteur ou l'arrêter afin de minimiser la consommation en carburant ainsi que les émissions polluantes.

Le document US 8 512 200 B2 décrit un procédé de pilotage d'une machine électrique tournante suivant le préambule de la revendication 1.

Dans les machines connues, l'arrêt du mode démarrage lors de l'activation d'une protection (thermique, temporelle, ou de vitesse) provoque l'ouverture des éléments de commutation de l'onduleur de la machine électrique. Le courant contenu dans le stator est alors renvoyé sur le réseau de bord du véhicule, provoquant un à-coup de couple au niveau de la façade accessoires et une surtension sur le réseau de bord.

La présente invention vise à remédier efficacement à cet inconvénient en proposant un procédé de pilotage d'une machine électrique tournante pour véhicule automobile comportant un stator et un rotor, la machine électrique tournante comportant un module de contrôle apte à générer une commande de stator à partir d'un couple et d'un gradient de couple à appliquer à la machine électrique tournante, caractérisé en ce que:
- suite à une demande d'activation d'un mode moteur de la machine électrique tournante, notamment lors du démarrage d'un moteur thermique de véhicule automobile, ledit procédé comporte une étape d'application d'un couple de consigne et d'un gradient de couple de consigne transmis par un calculateur moteur du véhicule automobile, et
- suite à une demande d'arrêt du mode moteur précédemment activé et indépendamment du couple et du gradient de couple requis par le calculateur moteur du véhicule automobile, ledit procédé comporte une étape d'application à la machine électrique tournante d'un couple de consigne égal à zéro ainsi que d'un gradient de couple prédéterminé.

L'invention permet ainsi, suite à la demande d'arrêt du mode moteur, de continuer à piloter la machine électrique pour diminuer le courant prélevé avant l'ouverture complète des éléments de commutation de l'onduleur. On évite ainsi les à-coups de couple ainsi que les surtensions sur le réseau de bord du véhicule automobile.

Selon une mise en œuvre, le gradient de couple prédéterminé dépend d'une vitesse de rotation de la machine électrique tournante.

Selon une mise en œuvre, plus la vitesse de rotation de la machine électrique tournante est élevée, mois le gradient de couple prédéterminé est important.

Selon une mise en œuvre, la demande d'arrêt du mode moteur est générée suite à l'expiration d'un délai d'application de couple.

Selon une mise en œuvre, la demande d'arrêt du mode moteur est générée suite un dépassement d'un seuil de température.

Selon une mise en œuvre, la demande d'arrêt du mode moteur est générée suite à un dépassement d'un seuil de vitesse de rotation de la machine électrique tournante.

Selon une mise en œuvre, le module de contrôle est en outre apte à générer la commande de stator à partir d'une température du rotor.

Selon une mise en œuvre, le module de contrôle est apte à générer une commande de rotor à partir du couple et du gradient de couple à appliquer à la machine électrique tournante.

Selon une mise en œuvre, la commande de rotor est une valeur d'un courant d'excitation.

Selon une mise en œuvre, la commande de stator est définie par un angle d'avance entre une tension du stator et une force électromotrice de la machine électrique tournante, un angle d'ouverture d'éléments de commutation d'un onduleur, et une tension ondulée.

Selon une mise en œuvre, la machine électrique tournante est un alternodemarreur.

L'invention a également pour objet un module de contrôle pour machine électrique tournante caractérisé en ce que qu'il comporte une mémoire stockant des instructions logicielles pour la mise en œuvre du procédé de pilotage de la machine électrique tournante tel que précédemment défini.

L'invention a encore pour objet un procédé de pilotage d'une machine électrique tournante pour véhicule automobile comportant un stator et un rotor, la machine électrique tournante comportant un module de contrôle apte à générer une commande de stator et une commande de rotor à partir d'un couple et d'un gradient de couple à appliquer à la machine électrique tournante, caractérisé en ce que:
- suite à une demande d'activation d'un mode moteur de la machine électrique tournante, notamment lors du démarrage d'un moteur thermique de véhicule automobile, ledit procédé comporte une étape d'application d'un couple de consigne et d'un gradient de couple de consigne transmis par un calculateur moteur du véhicule automobile, et
- suite à une demande d'arrêt du mode moteur précédemment activé et indépendamment du couple et du gradient de couple requis par le calculateur moteur du véhicule automobile, ledit procédé comporte une étape d'application à la machine électrique tournante d'un couple de consigne égal à zéro ainsi que d'un gradient de couple prédéterminé.

Les caractéristiques précédentes sont applicables seules ou en combinaison à cette dernière invention.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique fonctionnelle de l'alterno-démarreur mettant en œuvre le procédé selon l'invention d'optimisation du passage d'un mode de fonctionnement à un autre de la machine électrique;
La figure 2 est une représentation schématique des blocs fonctionnels intégrés dans l'unité de contrôle permettant de gérer l'application du couple de la machine électrique selon la présente invention;
La figure 3 est un diagramme des signaux observables lors de la mise en œuvre du procédé de pilotage selon l'invention;
La figure 4 représente la cartographie utilisée pour déterminer le gradient de couple interne de la machine électrique à partir d'une vitesse de rotation de la machine électrique.

Les éléments identiques, similaires, ou analogues, conservent la même référence d'une figure à l'autre.

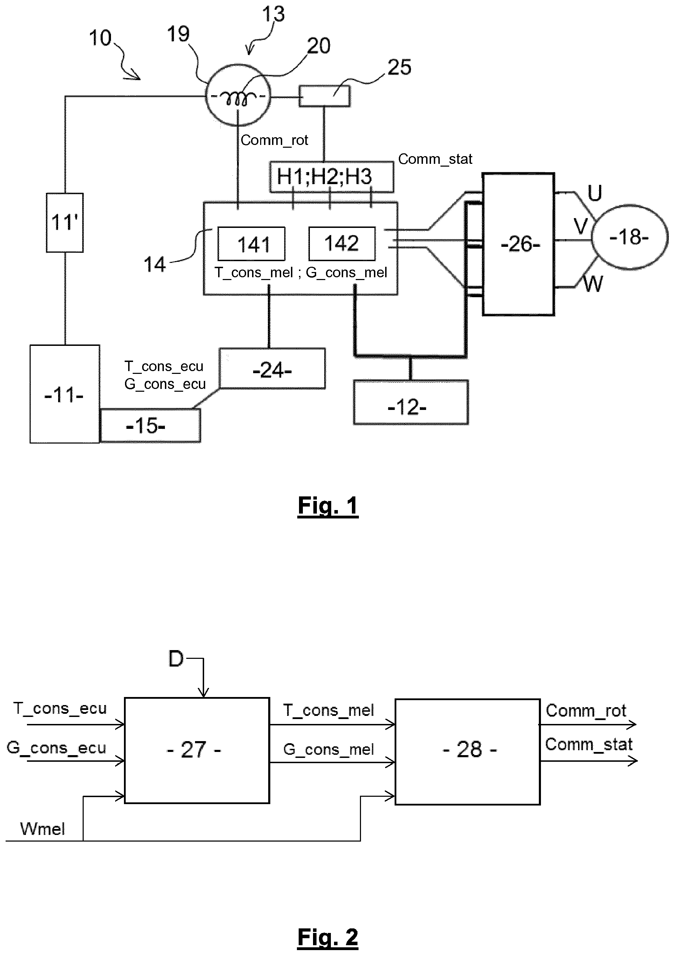

La figure 1 représente de façon schématique un alterno-démarreur 10 selon l'invention. L'alterno-démarreur 10 est destiné à être installé dans un véhicule comportant un réseau électrique de bord connecté à une batterie 12. Le réseau de bord pourra être de type 12V, 24V, ou 48V. L'alterno-démarreur 10 est accouplé à un moteur thermique 11 de façon connue en soi par un système à courroie 11' ou à chaîne implanté en façade accessoires.

En outre, l'alterno-démarreur 10 est apte à communiquer avec un calculateur moteur 15 suivant un protocole de communication de type LIN ("Local Interconnect Network" en anglais ou "Réseau Internet Local" en français) ou CAN ("Controller Area Network" en anglais qui est un bus de système série).

L'alterno-démarreur 10 pourra fonctionner en mode alternateur appelé également mode générateur ou en mode moteur.

L'alterno-démarreur 10 comprend notamment une partie électrotechnique 13 et un module de contrôle 14.

Plus précisément, la partie électrotechnique 13 comprend un élément induit 18 et un élément inducteur 19. Dans un exemple, l'induit 18 est le stator, et l'inducteur 19 est un rotor comportant une bobine d'excitation 20. En variante, le rotor comporte un paquet de tôle et des aimants permanents. Le stator 18 comprend un nombre N de phases. Dans l'exemple considéré, le stator 18 comporte trois phases U, V et W. En variante, le nombre N de phases pourra être égal à 5 pour une machine pentaphasée, à 6 pour une machine de type hexaphasée ou double triphasée ou à 7 pour une machine heptaphasée. Les phases du stator 18 pourront être couplées en triangle ou en étoile. Une combinaison de couplage triangle et étoile est également envisageable.

Le module de contrôle 14 comprend un circuit d'excitation 141 intégrant un hacheur pour générer un courant d'excitation qui est injecté dans la bobine d'excitation 20. La mesure du courant d'excitation pourra être réalisée par exemple à l'aide d'une résistance de type shunt.

Les mesures de la position angulaire et de la vitesse angulaire du rotor 19 pourront être réalisées au moyen de capteurs analogiques à effet hall H1, H2, H3 et d'une cible magnétique 25 associée qui est solidaire en rotation du rotor 19.

Le module de contrôle 14 comprend en outre un circuit de contrôle 142, comprenant par exemple un microcontrôleur, qui pilote un onduleur 26 en fonction d'un signal de commande issu du calculateur moteur 15 et reçu via un connecteur de signal 24.

L'onduleur 26 présente des bras comportant chacun deux éléments de commutation permettant de relier sélectivement une phase U, V, W correspondante du stator 18 à la masse ou à la tension d'alimentation B+ de la batterie 12 en fonction de leur état passant ou bloqué. Les éléments de commutation sont de préférence des transistors de puissance de type MOSFET.

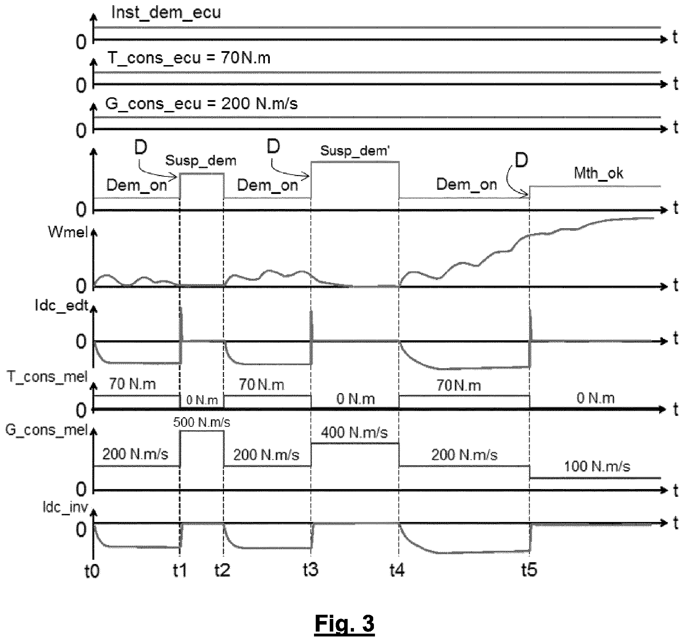

On décrit ci-après en référence avec les figures 2 et 3, le procédé selon l'invention de pilotage en couple de la machine électrique lors d'une phase de démarrage avorté du moteur thermique. Le module de contrôle 14 pourra comporter une mémoire stockant des instructions logicielles pour sa mise en œuvre.

Plus précisément, à l'instant t0, lors d'une demande d'activation du mode moteur de la machine électrique tournante lors du démarrage d'un moteur thermique du véhicule automobile, le calculateur moteur 15 transmet une instruction correspondante Inst_dem_ecu à la machine électrique 10 via le bus de communication, ainsi qu'un couple de consigne T_cons_ecu, et un gradient de consigne G_cons_ecu. Ce démarrage du moteur thermique se produit par exemple dans le cadre de la fonction d'arrêt et de redémarrage automatique du moteur thermique en fonction des conditions de circulation (fonction dite STT pour "stop and start" en anglais).

Un bloc fonctionnel 27 retransmet ces valeurs à un autre bloc fonctionnel 28 apte à générer une commande de stator Comm_stat et notamment une commande de rotor Comm_rot à partir de ces valeurs de couple et de gradient de couple. Les blocs fonctionnels 27, 28 sont de préférence intégrés au module de contrôle 14. La commande de rotor Comm_rot correspond à une valeur de courant d'excitation. La commande de stator Comm_stat est définie par un angle d'avance, un angle d'ouverture des éléments de commutation, et une tension ondulée. L'angle d'avance correspond à la différence de phase entre la tension circulant dans des phases du stator 18 (pilotée par les éléments de commutation de l'onduleur 26) et une force électromotrice de la machine électrique 10. L'angle d'ouverture correspond à l'angle électrique pendant lequel l'élément de commutation est au potentiel B+ de la batterie.

Ainsi, comme on peut le voir sur la figure 3, la machine 10 est dans un état de démarrage Dem_on. Le couple interne de consigne T_cons_mel correspond au couple de consigne T_cons_ecu transmis par le calculateur moteur 15, par exemple de 70N.m, et le gradient de couple de consigne G_cons_mel correspond au gradient de couple de consigne G_cons_ecu transmis par le calculateur moteur 15, par exemple de 200N.m/s.

A l'instant t1, suite à une demande d'arrêt D du mode moteur précédemment activé, par exemple suite à l'expiration d'un délai d'alerte correspondant à un échec du démarrage du moteur thermique, le bloc 27 applique à la machine électrique un couple de consigne T_cons_mel égal à zéro ainsi qu'un gradient de couple de consigne G_cons_mel prédéterminé, par exemple de l'ordre de 500N.m/s. Ces valeurs sont appliquées indépendamment du couple T_cons_ecu et du gradient de couple G_cons_ecu requis par le calculateur moteur 15.

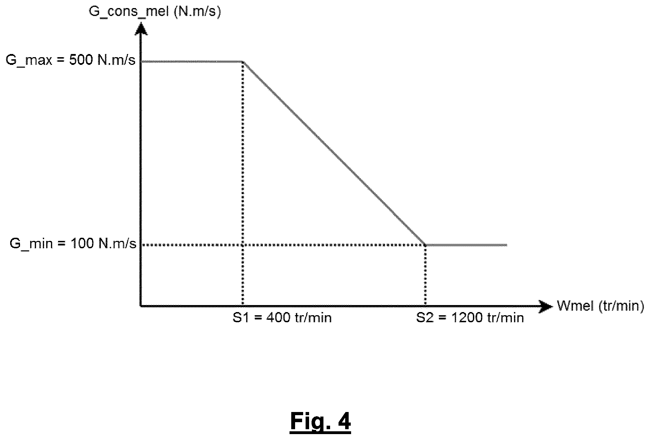

Le gradient de couple prédéterminé G_cons_mel dépend d'une vitesse de rotation Wmel de la machine électrique 10. De préférence, plus la vitesse est élevée, mois le gradient de couple prédéterminé est important. Suivant un exemple de mise en œuvre, le gradient de couple interne de la machine électrique G_cons_mel est défini en fonction de la vitesse de rotation Wmel de la machine électrique au moyen de la cartographie représentée sur la figure 4. Cette cartographie fixe une valeur maximale G_max constante de G_cons_mel, par exemple de 500N.m/s lorsque la vitesse de la machine électrique Wmel est inférieure à un seuil S1, par exemple de 400 tours/min. La cartographie fixe une valeur minimale G_min constante de G_cons_mel, par exemple de 100N.m/s lorsque la vitesse de la machine électrique Wmel est supérieure à un seuil S2, par exemple de 1200 tours/min. Le gradient G_cons_mel est décroissant de façon linéaire de G_max vers G_min lorsque la vitesse de rotation Wmel évolue de S1 vers S2. Bien entendu, d'autres formes de cartographies sont envisageables, notamment avec des évolutions suivant des fonctions polynomiales, exponentielles, ou autres.

On observe que par rapport à une stratégie ouvrant les éléments de commutation de l'onduleur 26, aucune surtension n'apparaît sur le réseau bord lors de la mise en œuvre du procédé de pilotage la machine selon l'invention (cf. courbe de courant sur le réseau de bord Idc_edt obtenue avec une stratégie classique et la courbe Idc_inv obtenue lors de la mise en œuvre selon l'invention).

La machine électrique 10 passe alors dans un état de suspension du démarrage Susp_dem qui dure par exemple environ 100ms.

La machine électrique 10 pourra repasser ensuite, à l'instant t2, dans un état de démarrage Dem_on dans lequel le couple de consigne T_cons_ecu et le gradient de couple G_cons_ecu sont appliqués à la machine électrique.

A l'instant t3, suite à l'expiration d'un délai d'alerte, le bloc 27 applique à la machine électrique 10 un couple de consigne T_cons_mel égal à zéro ainsi qu'un gradient de consigne G_cons_mel par exemple de l'ordre de 400N.m/s, en court-circuitant les valeurs T_cons_ecu, G_cons_ecu du calculateur moteur 15. La machine électrique 10 passe alors dans un état de suspension du démarrage Susp_dem' qui dure par exemple environ 200ms.

A l'instant t4, la machine électrique 10 repasse ensuite dans un état de démarrage Dem_on dans lequel le couple de consigne T_cons_ecu et le gradient de couple de consigne G_cons_ecu sont appliqués à la machine électrique 10.

A l'instant t5, suite au dépassement d'un seuil de vitesse de la machine électrique correspondant par exemple au seuil d'autonomie du moteur thermique, le bloc 27 applique à la machine électrique 10 un couple de consigne T_cons_mel égal à zéro ainsi qu'un gradient de couple de consigne G_cons_mel par exemple de l'ordre de 100N.m/s. Le démarrage du moteur thermique ayant réussi, la machine électrique 10 envoie sur le bus de communication un état correspondant Mth_ok.

En variante, la demande d'arrêt D du mode moteur pourra être générée suite à un dépassement d'un seuil de température de la machine électrique 10, notamment pour une température au niveau du stator 18, du rotor 19, ou de l'électronique de commande ou de puissance de la machine électrique 10.

Une fois le couple de la machine électrique 10 ramené à zéro, un courtcircuit des phases du stator 18 est effectué, par exemple pendant une période de l'ordre de 10ms plus ou moins 10%, afin que le courant résiduel dans le stator 18 soit éliminé en pertes Joules.

Bien entendu, la description qui précède a été donnée à titre d'exemple uniquement.

## Revendications

1. Procédé de pilotage d'une machine électrique tournante (10) pour véhicule automobile comportant un stator (18) et un rotor (19), la machine électrique tournante (10) comportant un module de contrôle (14) apte à générer une commande de stator (Comm_stat) à partir d'un couple et d'un gradient de couple à appliquer à la machine électrique tournante (10), **caractérisé en ce que**:
- suite à une demande d'activation d'un mode moteur de la machine électrique tournante (10), notamment lors du démarrage d'un moteur thermique de véhicule automobile, ledit procédé comporte une étape d'application d'un couple de consigne (T_cons_ecu) et d'un gradient de couple de consigne (G_cons_ecu) transmis par un calculateur moteur du véhicule automobile, et
- suite à une demande d'arrêt (D) du mode moteur précédemment activé et indépendamment du couple (T_cons_ecu) et du gradient de couple (G_cons_ecu) requis par le calculateur moteur (15) du véhicule automobile, ledit procédé comporte une étape d'application à la machine électrique tournante (10) d'un couple de consigne (T_cons_mel) égal à zéro ainsi que d'un gradient de couple prédéterminé (G_cons_mel).

2. Procédé selon la revendication 1, **caractérisé en ce que** le gradient de couple prédéterminé (G_cons_mel) dépend d'une vitesse de rotation (Wmel) de la machine électrique tournante (10).

3. Procédé selon la revendication 2, **caractérisé en ce que** plus la vitesse de rotation (Wmel) de la machine électrique tournante (10) est élevée, mois le gradient de couple prédéterminé (G_cons_mel) est important.

4. Procédé selon l'une quelconque des revendications 1 à 3, **caractérisé en ce que** la demande d'arrêt (D) du mode moteur est générée suite à l'expiration d'un délai d'application de couple.

5. Procédé selon l'une quelconque des revendications 1 à 3, **caractérisé en ce que** la demande d'arrêt (D) du mode moteur est générée suite un dépassement d'un seuil de température.

6. Procédé selon l'une quelconque des revendications 1 à 3, **caractérisé en ce que** la demande d'arrêt (D) du mode moteur est générée suite à un dépassement d'un seuil de vitesse de rotation de la machine électrique tournante (10).

7. Procédé selon l'une quelconque des revendications 1 à 6, **caractérisé en ce que** le module de contrôle (14) est apte à générer une commande de rotor (Comm_rot) à partir du couple et du gradient de couple à appliquer à la machine électrique tournante (10), la commande de rotor (Comm_rot) étant une valeur d'un courant d'excitation.

8. Procédé selon l'une quelconque des revendications 1 à 7, **caractérisé en ce que** la commande de stator (Comm_stat) est définie par un angle d'avance entre une tension du stator (18) et une force électromotrice de la machine électrique tournante (10), un angle d'ouverture d'éléments de commutation d'un onduleur (26), et une tension ondulée.

9. Procédé selon l'une quelconque des revendications 1 à 8, **caractérisé en ce que** la machine électrique tournante (10) est un alternodemarreur.

10. Module de contrôle (14) pour machine électrique tournante (10) **caractérisé en ce que** qu'il comporte une mémoire stockant des instructions logicielles pour la mise en œuvre du procédé de pilotage de la machine électrique tournante (10) tel que défini selon l'une quelconque des revendications précédentes.

## Patentansprüche

1. Verfahren zur Ansteuerung einer drehenden elektrischen Maschine (10) für ein Kraftfahrzeug, die einen Stator (18) und einen Rotor (19) umfasst, wobei die drehende elektrische Maschine (10) ein Steuermodul (14) umfasst, das geeignet ist, ein Statorkommando (Comm_stat) ausgehend von einem Drehmoment und einem Drehmomentgradienten zu erzeugen, die an die drehende elektrische Maschine (10) anzulegen sind, **dadurch gekennzeichnet, dass**:
- nach einer Aktivierungsanforderung eines motorischen Betriebs der drehenden elektrischen Maschine (10), insbesondere beim Starten eines Kraftfahrzeugverbrennungsmotors, das Verfahren einen Schritt des Anlegens eines Solldrehmoments (T_cons_ecu) und eines Solldrehmomentgradienten (G_cons_ecu) umfasst, die von einem Motorsteuergerät des Kraftfahrzeugs übertragen werden, und
- nach einer Abschaltanforderung (D) des zuvor aktivierten motorischen Betriebs und unabhängig vom Drehmoment (T_cons_ecu) und vom Drehmomentgradienten (G_cons_ecu), die vom Motorsteuergerät des Kraftfahrzeugs (15) angefordert werden, das Verfahren einen Schritt des Anlegens eines Solldrehmoments (T_cons_mel) gleich null sowie eines vorbestimmten Drehmomentgradienten (G_cons_mel) an die drehende elektrische Maschine (10) umfasst.

2. Verfahren nach Anspruch 1, **dadurch gekennzeichnet, dass** der vorbestimmte Drehmomentgradient (G_cons_mel) von einer Drehzahl (Wmel) der drehenden elektrischen Maschine (10) abhängig ist.

3. Verfahren nach Anspruch 2, **dadurch gekennzeichnet, dass**, je höher die Drehzahl (Wmel) der drehenden elektrischen Maschine (10) ist, desto geringer der vorbestimmte Drehmomentgradient (G_cons_mel) ist.

4. Verfahren nach einem der Ansprüche 1 bis 3, **dadurch gekennzeichnet, dass** die Abschaltanforderung (D) des motorischen Betriebs nach Ablauf einer Drehmomentanlegezeit erzeugt wird.

5. Verfahren nach einem der Ansprüche 1 bis 3, **dadurch gekennzeichnet, dass** die Abschaltanforderung (D) des motorischen Betriebs nach einer Überschreitung eines Temperaturschwellenwerts erzeugt wird.

6. Verfahren nach einem der Ansprüche 1 bis 3, **dadurch gekennzeichnet, dass** die Abschaltanforderung (D) des motorischen Betriebs nach einer Überschreitung eines Drehzahlschwellenwerts der drehenden elektrischen Maschine (10) erzeugt wird.

7. Verfahren nach einem der Ansprüche 1 bis 6, **dadurch gekennzeichnet, dass** das Steuermodul (14) geeignet ist, ein Rotorkommando (Comm_rot) ausgehend von dem Drehmoment und vom Drehmomentgradienten zu erzeugen, die an die drehende elektrische Maschine (10) anzulegen sind, wobei das Rotorkommando (Comm_rot) ein Wert eines Erregerstroms ist.

8. Verfahren nach einem der Ansprüche 1 bis 7, **dadurch gekennzeichnet, dass** das Statorkommando (Comm_stat) durch einen Voreilwinkel zwischen einer Spannung des Stators (18) und einer elektromotorischen Kraft der drehenden elektrischen Maschine (10), einen Öffnungswinkel von Kommutierungselementen eines Wechselrichters (26) und eine Mischspannung definiert wird.

9. Verfahren nach einem der Ansprüche 1 bis 8, **dadurch gekennzeichnet, dass** die drehende elektrische Maschine (10) ein Startergenerator ist.

10. Steuermodul (14) für eine drehende elektrische Maschine (10), **dadurch gekennzeichnet, dass** es einen Speicher umfasst, in dem Softwareanweisungen zur Durchführung des Verfahrens zur Ansteuerung der drehenden elektrischen Maschine (10) nach einem der vorhergehenden Ansprüche gespeichert sind.

## Claims

1. Method for controlling a rotary electric machine (10) for a motor vehicle, which includes a stator (18) and a rotor (19), the rotary electric machine (10) including a control module (14), which is able to generate a stator command (Comm_stat) on the basis of a torque and a torque gradient to be applied to the rotary electric machine (10), **characterized in that**:
- following a request to activate a motor mode of the rotary electric machine (10), in particular when a motor vehicle combustion engine is started, said method includes a step of applying a setpoint torque (T_cons_ecu) and a setpoint torque gradient (G_cons_ecu) transmitted by an engine computer of the motor vehicle, and
- following a request (D) to stop the previously activated motor mode, and independently of the torque (T_cons_ecu) and of the torque gradient (G_cons_ecu) required by the engine computer (15) of the motor vehicle, said method includes a step of applying a setpoint torque (T_cons_mel) equal to zero and a predetermined torque gradient (G_cons_mel) to the rotary electric machine (10).

2. Method according to Claim 1, **characterized in that** the predetermined torque gradient (G_cons_mel) is dependent on a speed of rotation (Wmel) of the rotary electric machine (10).

3. Method according to Claim 2, **characterized in that** the higher the speed of rotation (Wmel) of the rotary electric machine (10), the lower the predetermined torque gradient (G_cons_mel) is.

4. Method according to any one of Claims 1 to 3, **characterized in that** the request (D) to stop the motor mode is generated once a torque application period has elapsed.

5. Method according to any one of Claims 1 to 3, **characterized in that** the request (D) to stop the motor mode is generated once a temperature threshold has been exceeded.

6. Method according to any one of Claims 1 to 3, **characterized in that** the request (D) to stop the motor mode is generated once a threshold for the speed of rotation of the rotary electric machine (10) has been exceeded.

7. Method according to any one of Claims 1 to 6, **characterized in that** the control module (14) is able to generate a rotor command (Comm_rot) on the basis of the torque and the torque gradient to be applied to the rotary electric machine (10), the rotor command (Comm_rot) being a value of an excitation current.

8. Method according to any one of Claims 1 to 7, **characterized in that** the stator command (Comm_stat) is defined by an advance angle between a voltage of the stator (18) and an electromotive force of the rotary electric machine (10), an angle of aperture of switching elements of an inverter (26), and an inverter output voltage.

9. Method according to any one of Claims 1 to 8, **characterized in that** the rotary electric machine (10) is a starter-alternator.

10. Control module (14) for a rotary electric machine (10), **characterized in that** it includes a memory that stores software instructions for implementing the method for controlling the rotary electric machine (10) as defined according to any one of the preceding claims.
